# EUROPÄISCHE PATENTSCHRIFT

(11) **EP 3 445 699 B1**
(45) Veröffentlichungstag und Bekanntmachung des Hinweises auf die Patenterteilung: **13.05.2020**
(21) Anmeldenummer: 17718377.9
(22) Anmeldetag: 20.04.2017
(51) Int. Cl.: B67C 3/00, B67C 3/22, F16J 15/00

(54) **VORRICHTUNG ZUM BEFÜLLEN VON BEHÄLTERN IN EINER GETRÄNKEABFÜLLANLAGE**
DEVICE FOR FILLING CONTAINERS IN A BEVERAGE FILLING MACHINE
DISPOSITIF POUR REMPLIR DES RECIPIENTS DANS UNE SOUTIREUSE DES BOISSONS

(30) Priorität: 20.04.2016 DE 102016107355
(43) Veröffentlichungstag der Anmeldung: 27.02.2019
(73) Patentinhaber: Krones AG, 93073 Neutraubling (DE)
(72) Erfinder: SCHMID, Manfred, 93073 Neutraubling (DE)
(74) Vertreter: Nordmeyer, Philipp Werner
(86) Internationale Anmeldenummer: PCT/EP2017/059380
(87) Internationale Veröffentlichungsnummer: WO 2017/182563

(56) Entgegenhaltungen:
- WO-A1-2014/139627
- DE-U1- 20 120 014
- GB-A- 2 067 530

## Beschreibung

### Technisches Gebiet

Die vorliegende Erfindung betrifft eine Vorrichtung sowie ein Verfahren zum Befüllen mindestens eines Behälters mit einem Füllprodukt in einer Getränkeabfüllanlage, mit einem Produktvorhaltebehälter zur Aufnahme des Füllprodukts und mindestens einem mit dem Produktvorhaltebehälter kommunizierenden Füllorgan zur Befüllung des Behälters mit dem Füllprodukt, sowie einem Produktzulaufrohr zum Zuführen eines Füllprodukts in den Produktvorhaltebehälter, wobei eine Dichtung zur Abdichtung des Produktzulaufrohrs gegenüber dem Innenraum des Produktvorhaltebehälters vorgesehen ist.

### Stand der Technik

In Rundläuferfüllanlagen werden Füllprodukte und anderen Medien, welche beim Abfüllen des Füllprodukts erforderlich sind, in der Regel über einen Mediendrehverteiler von einem stehenden Anlagenteil an den rotierenden Anlagenteil übergeben. Dabei umfasst der Mediendrehverteiler für gewöhnlich eine feststehende Welle und einen sich mit dem Füllerkarussell mitdrehenden Verteilerkopf mit Gehäuse. Die einzelnen Medien werden dabei über Drehverteilerspuren übertragen, welche in der Regel mehrere Dichtlippen aufweisen, die die einzelnen Drehverteilerspuren gegeneinander abdichten.

Ein Nachteil derartiger Drehverteiler liegt in der Verschleißanfälligkeit der zueinander rotierenden Elemente, insbesondere der Dichtlippen. Der Verschleiß führt zum einen zu kurzen Standzeiten der Getränkeabfüllanlage, zum anderen können Verunreinigungen des Füllprodukts durch Materialabrieb auftreten.

Aus der GB 2 067 530 A ist ein Getränkeabfüllanlage gemäß dem Oberbegriff des Anspruchs 1 bekannt, welche auf den Einsatz eines Mediendrehverteilers verzichtet und stattdessen ein stationäres Rohr zeigt, welches zum Zuführen von Füllprodukt in einen rotierenden Produktvorhaltebehälter führt. Der Innenraum des Produktvorhaltebehälters ist dabei über eine Rotationsdichtung zwischen dem Rohr und dem Produktvorhaltebehälter gegenüber der Umgebung abgedichtet.

Ein Nachteil dieser Getränkeabfüllanlage ist jedoch, dass der während des Füllbetriebs nötige Druckausgleich im Inneren des Behälters nur über ein entsprechendes Steuerungs-/Regelungssystem und einen Gasaustausch zwischen dem zu befüllenden Behälter und dem Produktvorhaltebehälter ermöglicht werden kann. Ein weiterer Nachteil besteht in der Rotationsdichtung, welche Abrieb produzieren kann, welcher zu einer Verunreinigung des Füllprodukts führen kann. Drüber hinaus bildet die Rotationsdichtung ein Verschleißteil, welches zu einer Verkürzung der Standzeiten der Getränkeabfüllanlage beitragen kann.

Die WO 2014/139627 A1 zeigt eine Getränkeabfüllanlage mit einem Drehverteiler, in dem eine schaltbare Dichtung vorgesehen ist. Weiterhin ist aus der EP 2 848 577 A1 eine Getränkeabfüllanlage bekannt, welche eine schaltbare Dichtung zwischen einem rotierenden Produktvorlagebehälter und einem stationären Deckel aufweist.

### Darstellung der Erfindung

Ausgehend von dem bekannten Stand der Technik ist es eine Aufgabe der vorliegenden Erfindung, eine verbesserte Vorrichtung und ein verbessertes Verfahren zum Befüllen mindestens eines Behälters mit einem Füllprodukt in einer Getränkeabfüllanlage anzugeben.

Diese Aufgabe wird mittels einer Vorrichtung mit den Merkmalen des Anspruchs 1 gelöst. Vorteilhafte Ausgestaltungen ergeben sich aus den Unteransprüchen.

Entsprechend wird eine Vorrichtung zum Befüllen mindestens eines Behälters mit einem Füllprodukt in einer Getränkeabfüllanlage, mit einem Produktvorhaltebehälter zur Aufnahme des Füllprodukts und mindestens einem mit dem Produktvorhaltebehälter kommunizierenden Füllorgan zur Befüllung des Behälters mit dem Füllprodukt, sowie einem Produktzulaufrohr zum Zuführen von Füllprodukt in den Produktvorhaltebehälter angegeben, wobei eine Dichtung zur Abdichtung des Produktzulaufrohrs gegenüber einem Innenraum des Produktvorhaltebehälters vorgesehen ist. Erfindungsgemäß ist die Dichtung dabei zwischen einer abdichtenden Position zur Reinigung und einer nicht-abdichtenden Position für den Füllbetrieb schaltbar.

Dadurch ist ein druckloses Befüllen des mindestens einen Behälters mit dem Füllprodukt möglich. So befindet sich während des Füllbetriebs die Dichtung in einer nicht-abdichtenden Position, wodurch der Innenraum des Produktvorhaltebehälters, insbesondere das Gas über dem Füllprodukt im Produktvorhaltebehälter, in Fluidverbindung mit einer unmittelbaren Umgebung des Produktvorhaltebehälters steht. Durch diese Fluidverbindung kann ein Unterdruck im Produktvorhaltebehälter, welcher durch eine Abgabe von Füllprodukt vom Produktvorhaltebehälter an das entsprechende Füllorgan entsteht, ausgeglichen werden.

Dadurch, dass die Dichtung das Produktzulaufrohr gegenüber dem Innenraum des Produktvorhaltebehälters abdichtet, werden die Voraussetzungen für die Reinigung der Vorrichtung, insbesondere für eine CIP-Reinigung, geschaffen, in der das Reinigungsmedium unter Druck eingebracht und gehalten wird. Im Reinigungsbetrieb wird ein Reinigungsmedium dem Produktvorhaltebehälter unter Druck über das Produktzulaufrohr oder in dem Produktvorhaltebehälter angeordnete Reinigungsdüsen zugeführt, um alle produktberührten Bauteile zu durchspülen. Die mit dem Produktvorhaltebehälter in Verbindung stehenden Füllorgane werden beispielsweise mit Hilfe von CIP-Kappen verschlossen, so dass das Reinigungsmedium, ausgehend von dem Produktvorhaltebehälter, auch die Füllorgane durchspülen kann.

Um einen entsprechenden Reinigungskreislauf bereitzustellen, mittels welchem die produktberührten Bauteile durchspült werden, muss im Inneren der kommunizierenden Bauteile, insbesondere im Produktvorhaltebehälter, ein Überdruck erzeugt werden. Ein entsprechender Überdruck lässt sich in der Vorrichtung aber nur dann aufbauen und halten, wenn die Dichtung die abdichtende Position zur Reinigung eingenommen hat.

In einer bevorzugten Ausführungsform weist der Produktvorhaltebehälter eine Öffnung auf, durch welche das Produktzulaufrohr in den Produktvorhaltebehälter geführt ist, wobei zwischen der Öffnung und dem Produktzulaufrohr ein Spalt bereitgestellt ist, welcher mittels der Dichtung verschließbar ist.

Wenn sich die Dichtung im Füllbetrieb in der nicht abdichtenden Position befindet, kommuniziert der Innenraum des Produktvorhaltebehälters, bevorzugt das Gas über dem Füllprodukt im Produktvorhaltebehälter, mit der Umgebung des Produktvorhaltebehälters. Somit kann der für die Behälterbefüllung nötige Druckausgleich über den Spalt zwischen dem Produktvorhaltebehälter und dem Produktzulaufrohr im Bereich der Öffnung des Produktvorhaltebehälters ausgeglichen werden.

Um im Inneren des Produktvorhaltebehälters einen für die Reinigung erforderlichen Überdruck aufbauen zu können, kann der Spalt zwischen dem Produktvorhaltebehälter und dem Produktzulaufrohr im Bereich der Öffnung des Produktvorhaltebehälters durch die Dichtung verschlossen werden. Der Innenraum des Produktvorhaltebehälters kommuniziert dann nur noch mit produktberührten Anlagenteilen.

In einer bevorzugten Weiterbildung ist das Produktzulaufrohr stationär und konzentrisch zu dem Produktvorhaltebehälter angeordnet, wobei der Produktvorhaltebehälter um das Produktzulaufrohr herum rotierbar angeordnet ist.

Dadurch ist es möglich, dem Produktvorhaltebehälter das Füllprodukt ohne die Verwendung eines Mediendrehverteilers zuzuführen. Entsprechend kommt die Vorrichtung ohne die Verwendung dynamischer Dichtungen aus. Dynamische Dichtungen bilden Verschleißteile, welche eine vergleichsweise geringe Lebensdauer aufweisen. Die Verwendung von dynamischen Dichtungen, wie beispielsweise in Mediendrehverteilern, führt zu kurzen Standzeiten der Getränkeabfüllanlage, da die dynamischen Dichtungen aufgrund der geringen Lebensdauer häufig gewartet werden müssen. Ein weiterer Nachteil der dynamischen Dichtungen besteht in einem Abrieb von Dichtungspartikeln, welcher in das Füllprodukt gelangen kann und dieses entsprechend verunreinigt.

Ein weiterer Vorteil der vorgeschlagenen Vorrichtung liegt darin, dass zur Bereitstellung der Produktzufuhr von dem Produktzulaufrohr im Gegensatz zu einem Mediendrehverteiler keine Schmierfette benötigt werden. Derartige Schmierfette wirken sich zum einen negativ auf die Fertigungskosten aus, zum anderen besteht die Gefahr, dass das Füllprodukt durch die Schmierfette verunreinigt wird.

Der Verzicht auf einen Mediendrehverteiler wirkt sich auch vorteilhaft auf den Reinigungsaufwand aus. Entsprechend fallen die Zeit zum Reinigen des Mediendrehverteilers sowie die dazu benötigten Mittel weg.

Insgesamt ergibt sich durch ein stationäres Produktzulaufrohr, um welches der Produktvorhaltebehälter im Füllbetrieb kontaktlos rotiert, eine vergleichsweise wartungsärmere und in den Investitionskosten sowie den Betriebs- und Herstellungskosten günstigere Vorrichtung zum Befüllen mindestens eines Behälters mit einem Füllprodukt.

In einer weiter bevorzugten Ausgestaltung ist die Dichtung an dem Produktzulaufrohr, bevorzugt einer äußeren Umfangsoberfläche des Produktzulaufrohrs, oder an dem Produktvorhaltebehälter, bevorzugt an einer Öffnung des Produktvorhaltebehälters, angeordnet.

Entsprechend ist die Dichtung an einer Position angeordnet, welche mit dem Füllprodukt nicht in Kontakt tritt. Befindet sich die Dichtung in der nicht-abdichtenden Position für den Füllbetrieb, so wird sie lediglich von dem Gas umströmt, welches zwischen dem Innenraum des Behälters und der Umgebung des Behälters strömt, um den für den Füllbetrieb benötigten Druckausgleich zu ermöglichen.

In einer weiter bevorzugten Weiterbildung sind das Produktzulaufrohr und der Produktvorhaltebehälter zumindest teilweise von einem Isolator umgeben.

Dadurch wird sichergestellt, dass das Gas in der Umgebung des Produktvorhaltebehälters, mit welcher der Innenraum des Produktvorhaltebehälters während dem Füllbetrieb in Fluidverbindung steht, eine maximale Anzahl von Partikeln in Verbindung mit bestimmten Partikelgrößen pro Kubikmeter nicht überschreitet und insbesondere keine Mikroorganismen aufweist. Die Umgebung des Produktvorhaltebehälters bildet entsprechend bevorzugt einen Teil eines Reinraums, welcher von dem Isolator eingeschlossen ist. Entsprechend ist die nicht-abdichtende Position der Dichtung für den Füllbetrieb unbedenklich, da ein Gasaustausch zum Druckausgleich im Innenraum des Produktvorhaltebehälters nur mit einem Bereich erfolgt, welcher Teil des Reinraums ist.

In einer weiter bevorzugten Weiterbildung ist das Produktzulaufrohr über eine Dichtung, bevorzugt einen Balg, abgedichtet in den Isolator geführt. Dadurch ist es möglich, dass ein Teil des Produktzulaufrohrs außerhalb des Isolators liegt, um beispielsweise zu einem Produkttank zu führen. Somit kann der Reinraum beziehungsweise der aseptische Bereichs möglichst klein gehalten werden. Teile der Anlage, die nicht auf eine reinraumgerechte Umgebung angewiesen sind, wie zum Beispiel Antriebseinheiten, werden entsprechend außerhalb des Reinraums angeordnet.

Für den Fall, dass die Dichtung zwischen dem Produktzulaufrohr und dem Isolator in Form eines Balgs ausgeführt ist, können Hubbewegungen des Produktzulaufrohrs relativ zu dem Isolator in Richtung der Längsachse des Produktzulaufrohrs ausgeglichen werden. Der Reinraum, welcher durch den Isolator eingeschlossen ist, bleibt somit auch bei Hubbewegungen des Produktzulaufrohrs gegenüber der Umgebung abgedichtet.

In einer weiteren Ausführungsform kommuniziert im Füllbetrieb, in dem die Dichtung in der geöffneten Position ist, der Innenraum des Produktvorhalbebehälters mit dem Innenraum des Isolators zum Druckausgleich.

Dadurch wird ein druckloses Befüllen mindestens eines Behälters mit dem Füllprodukt ermöglicht. Durch das Austreten von Füllprodukt aus dem Produktvorhaltebehälter durch mindestens ein entsprechendes Füllorgan entsteht im Produktvorhaltebehälter ein Unterdruck. Der Druck im Produktvorhaltebehälter muss ausgeglichen werden, da sonst der Unterdruck verhindert, dass weiteres Füllprodukt durch das mindestens eine Füllorgan aus dem Produktvorhaltebehälter austreten kann. Dadurch, dass sich die Dichtung in der geöffneten Position befindet, wodurch der Innenraum des Produktvorhaltebehälters mit dem Innenraum des Isolators fluidtechnisch in Verbindung steht, kann ein Gas aus dem Innenraum des Isolators in den Innenraum des Produktvorhaltebehälters strömen und so für einen Druckausgleich im Innenraum des Produktvorhaltebehälters sorgen.

Da der Innenraum des Isolators einen Reinraum bildet, in dessen Gasvolumen eine vorbestimmte Partikelanzahl in Verbindung mit bestimmten Partikelgrößen pro Kubikmeter nicht überschritten wird und der Reinraum in der Regel frei von Mikroorganismen ist, wird sichergestellt, dass das Gas, welches zum Druckausgleich während dem Füllbetrieb vom Innenraum des Isolators in den Innenraum des Produktvorhaltebehälters strömt, nicht zu einer Verunreinigung des Füllprodukts beziehungsweise des Innenraums des Produktvorhaltebehälters führt.

In einer weiter bevorzugten Ausführungsform ist das Produktzulaufrohr und/oder der Produktvorhaltebehälter zwischen einer geöffneten und einer abdichtenden Position verschiebbar, wobei die Dichtung relativ zu dem Produktvorhaltebehälter und/oder dem Produktzulaufrohr bewegbar ist. Insbesondere ist das Produktzulaufrohr anhebbar und absenkbar, um auf diese Weise die Dichtung zwischen der abdichtenden Position und der nicht-abdichtenden Position zu schalten.

Ist das Produktzulaufrohr verschiebbar ausgeführt, so kann durch ein Verschieben des Produktzulaufrohrs in Richtung der Längsachse zwischen der Position für den Füllbetrieb und der Position für die Reinigung geschaltet werden. Für den Fall, dass die Dichtung auf einer äußeren Umfangsoberfläche des Produktzulaufrohrs angeordnet ist, kann das Produktzulaufrohr gemeinsam mit der Dichtung in Richtung der Längsachse des Produktzulaufrohrs verschoben werden, bis die Dichtung gegen den Produktvorhaltebehälter abdichtet und so eine Kommunikation zwischen dem Innenraum des Produktvorhaltebehälters und einer Umgebung des Produktvorhaltebehälters unterbindet. Um den drucklosen Füllbetrieb zu ermöglichen, wird das Produktzulaufrohr gemeinsam mit der Dichtung in die entgegengesetzte Richtung bewegt, so dass sich der Kontakt zwischen der Dichtung und dem Produktvorhaltebehälter löst. Dadurch kann ein Spalt zwischen der äußeren Umfangsoberfläche des Produktzulaufrohrs und einer Öffnung im Produktvorhaltebehälter bereitgestellt werden, so dass ein Gas zwischen dem Innenraum des Produktvorhaltebehälters und der Umgebung des Produktvorhaltebehälters strömen kann, um einen Druckausgleich zu ermöglichen.

Befindet sich die Dichtung im Füllbetrieb in der geöffneten Position, so besteht keine Verbindung zwischen dem Produktzulaufrohr und dem Produktvorhaltebehälter. Entsprechend ist es möglich, dass der Produktvorhaltebehälter relativ zu dem Produktzulaufrohr um dieses herum rotiert, ohne dass es zu einem Materialabrieb von aufeinander schleifenden Teilen kommt. Die Dichtung kontaktiert den Produktvorhaltebehälter bevorzugt nur dann, wenn der Produktvorhaltebehälter keine relative Drehbewegung zu dem Produktzulaufrohr ausführt, was zum Beispiel im Reinigungsbetrieb der Fall sein kann ist. Entsprechend ist es nicht erforderlich, die Dichtung für eine dynamische Belastung auszulegen.

Alternativ kann der Produktvorhaltebehälter zwischen einer geöffneten und einer abdichtenden Position verschiebbar beziehungsweise anhebbar und absenkbar ausgebildet sein. Beispielsweise kann der Produktvorhaltebehälter in Richtung der Längsachse des Produktzulaufrohrs verschiebbar angeordnet sein. Dabei besteht während des drucklosen Füllbetriebs kein Kontakt zwischen dem Produktvorhaltebehälter und der an dem Produktzulaufrohr angeordneten Dichtung. Der Produktvorhaltebehälter kann in Bezug auf das Produktzulaufrohr kontaktlos um dieses herum rotieren, wobei ein Gasausgleich zwischen dem Innenraum des Produktvorhaltebehälters und einer Umgebung des Produktvorhaltebehälters ermöglicht wird. Zur Bereitstellung des Reinigungsbetriebs wird der Produktvorhaltebehälter relativ zu dem Produktzulaufrohr in Richtung der Längsachse des Produktzulaufrohrs verschoben, bis der Produktvorhaltebehälter, bevorzugt eine Öffnung des Produktvorhaltebehälters, die auf dem Produktzulaufrohr angeordnete Dichtung kontaktiert. Dadurch ist der Innenraum des Produktvorhaltebehälters von der Umgebung des Produktvorhaltebehälters getrennt, insbesondere besteht keine fluidtechnische Verbindung zwischen dem Innenraum und den weiteren Teilen des Reinraums.

Alternativ kann die Dichtung auch an dem Produktvorhaltebehälter angeordnet sein und in der abdichtenden Position mit dem Produktzulaufrohr kontaktiert werden.

In einer weiteren Ausgestaltung ist an dem Produktzulaufrohr und/oder dem Produktvorhaltebehälter mindestens eine Hubeinrichtung, bevorzugt ein Pneumatikzylinder, zum Bereitstellen einer Hubbewegung zwischen der geöffneten und der abdichtenden Position angeordnet. Dadurch kann die Hubbewegung bereitgestellt werden, welche benötigt wird, um zwischen der Position für den Füllbetrieb und der Position für die Reinigung zu wechseln.

In einer Weiterbildung ist die Dichtung ein O-Ring oder eine Dichtlippe. Ist die Dichtung in Form eines O-Rings bereitgestellt, kann der O-Ring auf der äußeren Umfangsoberfläche des Produktzulaufrohrs oder an einer Öffnung des Produktvorhaltebehälters, insbesondere umlaufend um eine kreisförmige Öffnung, angeordnet sein. Ein O-Ring eignet sich insbesondere für eine statische Dichtung.

Alternativ kann eine Dichtlippe umlaufend an dem Produktzulaufrohr oder an dem Produktvorhaltebehälter angeordnet sein. Die Dichtlippe ist auch für dynamische Belastungen geeignet. So ist es möglich, den Innenraum des Produktvorhaltebehälters gegenüber der Umgebung des Produktvorhaltebehälters abzudichten, selbst wenn der Produktvorhaltebehälter relativ zum Produktzulaufrohr eine Rotationsbewegung ausführt. Da relative Rotationsbewegungen des Produktvorhaltebehälters zu dem Produktzulaufrohr in der abdichtenden Position für die vorliegende Vorrichtung in der Regel nicht vorgesehen sind, dient die Dichtlippe in erster Linie zur statischen Abdichtung des Produktvorhaltebehälters gegenüber dem Produktzulaufrohr, wobei für den unvorhergesehenen Fall, dass in der abdichtenden Position dennoch eine relative Rotationsbewegung zwischen dem Produktvorhaltebehälter und dem Produktzulaufrohr auftritt, die Dichtwirkung der Dichtung weiterhin aufrechterhalten werden kann.

Die oben genannte Aufgabe wird auch durch ein Verfahren mit den Merkmalen des Anspruchs 11 gelöst.

Entsprechend wird ein Verfahren zum Reinigen einer Vorrichtung zum Befüllen von Behältern mit einem Füllprodukt in einer Getränkeabfüllanlage angegeben, wobei die Vorrichtung bevorzugt gemäß einem der oben beschriebenen Aspekte ausgebildet ist, umfassend Abdichten eines Produktzulaufrohrs gegen einen Produktvorhaltebehälter für den Reinigungsbetrieb, Reinigen der Vorrichtung, insbesondere des Produktvorhaltebehälters, und Öffnen der Dichtung zwischen dem Produktzulaufrohr und dem Produktvorhaltebehälter für den Füllbetrieb.

Mit Hilfe dieses Verfahrens werden auch die oben bezüglich der Vorrichtung dargestellten Vorteile erreicht.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine Schnittansicht einer Vorrichtung zum Befüllen mindestens eines Behälters mit einem Füllprodukt in einer Getränkeabfüllanlage, wobei sich die Vorrichtung in einem Füllbetrieb befindet,
- Figur 2: schematisch eine Detailansicht der Vorrichtung aus Figur 1,
- Figur 3: schematisch eine Detailansicht der Vorrichtung aus Figur 1, wobei sich die Vorrichtung in einem Reinigungsbetrieb befindet,
- Figur 4: schematisch eine Detailansicht einer Dichtung eines Produktzulaufrohrs gegenüber einem Isolator, und
- Figur 5: schematisch eine Detailansicht einer Hubvorrichtung des Produktzulaufrohrs.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleich wirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

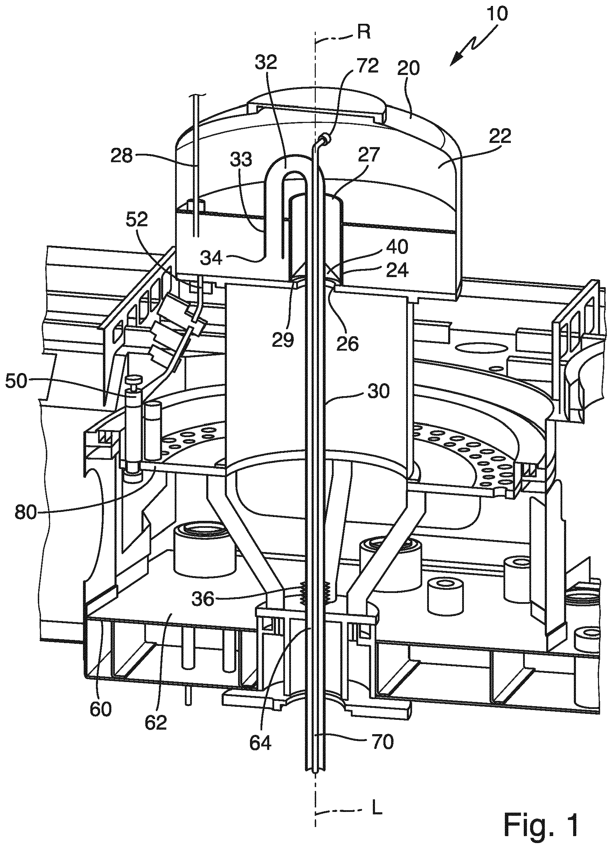

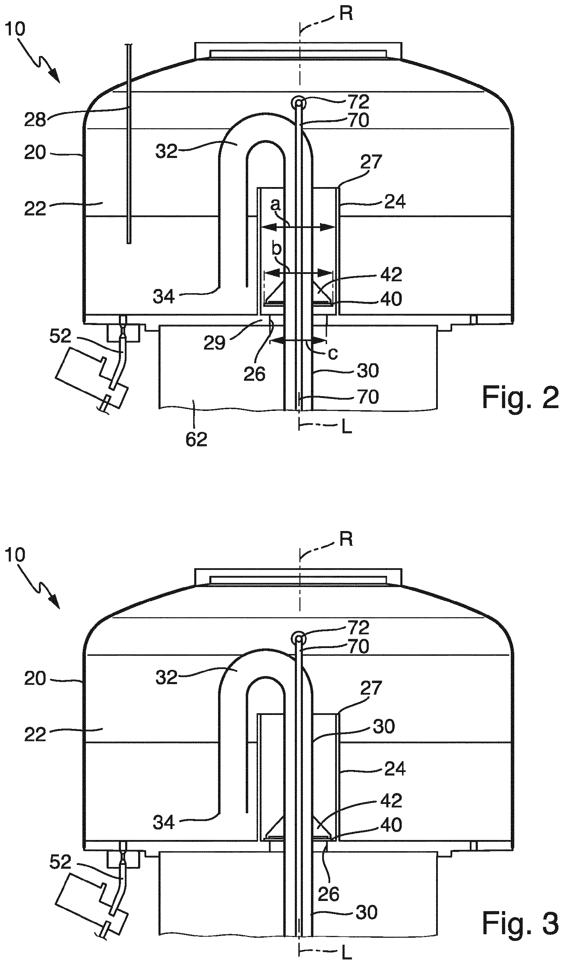

Figur 1 ist eine Schnittansicht einer Vorrichtung 10 zum Befüllen mindestens eines hier nicht gezeigten Behälters mit einem Füllprodukt in einer Getränkeabfüllanlage zu entnehmen. Die Vorrichtung 10 umfasst einen Produktvorhaltebehälter 20 zur Aufnahme eines Füllprodukts. Der in den Figuren 1 und 2 gezeigte Produktvorhaltebehälter 20 befindet sich hier im Füllbetrieb, in welchem der Produktvorhaltebehälter 20 um eine senkrecht verlaufende Rotationsachse R rotiert. In einem Bodenbereich des Produktvorhaltebehälters 20 ist eine Füllorganversorgung 52 angeordnet, durch welche das Füllprodukt von dem Produktvorhaltebehälter 20 zu einem Füllorgan 50 strömen kann. Dabei rotieren im Füllbetrieb der Produktvorhaltebehälter 20, die Füllorganversorgung 52 und das Füllorgan 50 gemeinsam mit einem Drehteller 80 der Getränkeabfüllanlage um die Rotationsachse R. Der Drehteller 80 dient dabei zur Aufnahme mindestens eines Füllorgans 50.

Figuren 1 und 2 zeigen ferner, dass der Produktvorhaltebehälter 20 im Bodenbereich eine mittig angeordnete Öffnung 26 aufweist. Die Öffnung 26 ist in einem Innenraum 22 des Produktvorhaltebehälters 20 von einer rohrförmigen Innenwand 24 umgeben. Die rohrförmige Innenwand 24 erstreckt sich senkrecht in den Innenraum 22 des Produktvorhaltebehälters 20 und endet oberhalb eines Füllstands des in dem Produktvorhaltebehälter 20 aufgenommenen Füllprodukts. Die rohrförmige Innenwand 24 weist an einem oberen Ende eine zweite Öffnung 27 auf die mit dem Innenraum 22 kommuniziert. Um sicherzustellen, dass der Füllstand des in dem Produktvorhaltebehälter 20 aufgenommenen Füllprodukts nicht auf beziehungsweise über die Höhe der Innenwand 24 steigt und über die zweite Öffnung 27 aus dem Produktvorhaltebehälter 20 strömt, weist der Produktvorhaltebehälter 20 eine Füllstandsonde 28 auf. Wird über die Füllstandsonde 28 ein vorgegebener Füllstand festgestellt, kann eine Füllproduktzufuhr an den Produktvorhaltebehälter 20 unterbrochen werden.

Die erste Öffnung 26, die Innenwand 24 und die zweite Öffnung 27 des Produktvorhaltebehälters 20 dienen dazu, ein Produktzulaufrohr 30 zum Zuführen von Füllprodukt in den Innenraum 22 des Produktvorhaltebehälters 20 zu führen. Das Produktzulaufrohr 30 verläuft senkrecht entlang einer Längsachse L und tritt von unten her kommend durch die erste Öffnung 26 des Produktvorhaltebehälters 22 in diesen ein. Das Produktzulaufrohr 30 erstreckt sich ferner parallel zu der rohrförmigen Innenwand 24 und tritt schließlich durch die zweite Öffnung 27 hindurch. Oberhalb der zweiten Öffnung 27 des Produktvorhaltebehälters 20 weist das Produktzulaufrohr 30 einen zurückgebogenen Abschnitt 32 auf. Der umgebogene Abschnitt 32 ist U-förmig und mündet in einen Endabschnitt 33 des Produktzulaufrohrs 30, welcher parallel zu der Längsachse L des zurückgebogenen Abschnitts 32 zu einer Produktzulaufrohröffnung 34 verläuft. Entsprechend ist das Produktzulaufrohr 30 um die rohrförmige Innenwand 24 herum gebogen, so dass dem Produktvorhaltebehälter 20 das Füllprodukt zugeführt werden kann.

In der in Figur 1 und 2 gezeigten Vorrichtung 10 ist die Produktzulaufrohröffnung 34 unterhalb der zweiten Öffnung 27 des Produktvorhaltebehälters 20 angeordnet. Gemeinsam mit der Füllstandsonde 28 kann durch diese Anordnung sichergestellt werden, dass das dem Produktvorhaltebehälter 20 über das Produktzulaufrohr 30 zugeführte Füllprodukt nicht über die zweite Öffnung 27 wieder aus dem Innenraum 22 des Produktvorhaltebehälters 20 austritt.

Die in den Figuren 1 und 2 gezeigte Anordnung der Vorrichtung 1 ermöglicht während des Füllbetriebs einen Druckausgleich zwischen dem Innenraum 22 des Produktvorhaltebehälters 20 und einer Umgebung des Produktvorhaltebehälters 20. Dieser ist nötig, da im Füllbetrieb durch das durch die Füllorganversorgung 52 austretende Füllprodukt ein Unterdruck im Innenraum 22 des Produktvorhaltebehälters 20 entstehen kann. Wird dieser Unterdruck nicht ausgeglichen, kann der Füllbetrieb nicht fortgesetzt werden, da ein in dem Produktvorhaltebehälter 20 herrschender Unterdruck das Austreten von Füllprodukt durch die Füllorganversorgung 52 verhindert. Entsprechend kommuniziert ein Gasraum, welcher sich im Innenraum 22 oberhalb des Füllprodukts befindet, über die zweite Öffnung 27, die rohrförmige Innenwand 24 und die erste Öffnung 26 mit der Umgebung. Gas strömt aus der Umgebung durch die erste Öffnung 26 in den Innenraum 22 des Produktvorhaltebehälters 20 nach, so dass der Druck im Innenraum 22 dem Umgebungsdruck entspricht und daher das Füllprodukt den Produktvorhaltebehälter 20 über die Füllorganversorgung 52 verlassen kann.

Die Umgebung unterhalb des Produktvorhaltebehälters 20 ist Teil eines Reinraums 62, welcher von einem schematisch angedeuteten Isolator 60 eingeschlossen ist. Der von dem Isolator 60 eingeschlossene Reinraum 62 bildet einen aseptischen Bereich, welcher den Hygieneanforderungen für die Abfüllung im Lebensmittelbereich gerecht wird. In dem Reinraum 62 wird eine vorgegebene Partikelanzahl und Partikelgröße pro Kubikmeter Luftvolumen nicht überschritten. Das Gas beziehungsweise die Luft, welche im Füllbetrieb durch die erste Öffnung 26 in den Innenraum 22 des Produktvorhaltebehälters 20 strömt, stammt aus dem Teil des Reinraums 62 unterhalb des Produktvorhaltebehälters 30. Dadurch ist sichergestellt, dass das Füllprodukt durch die zum Druckausgleich in den Produktvorhaltebehälter 20 strömende Luft nicht verunreinigt wird.

Die Figuren 1 und 2 zeigen weiterhin eine Dichtung 40, welche auf der äußeren Umfangsoberfläche des Produktzulaufrohrs 30 oberhalb der Öffnung 26 des Produktvorhaltebehälters 20 angeordnet ist. Die erste Öffnung 26 des Produktvorhaltebehälters 20 weist einen geringeren Durchmesser als die rohrförmige Innenwand 24 auf, wodurch zwischen der ersten Öffnung 26 und der rohrförmigen Innenwand 24 ein ringförmiger Absatz 29 bereitgestellt ist. Die auf der äußeren Umfangsoberfläche des Produktzulaufrohrs 30 angeordnete Dichtung 40 ist ringförmig ausgebildet. Figur 2 ist zu entnehmen, dass die Dichtung 40 über eine Halterung 42 auf der äußeren Umfangsoberfläche des Produktzulaufrohrs 30 angeordnet ist. Die Dichtung 40 weist einen äußeren Durchmesser b auf, welcher kleiner ist als ein Innendurchmesser a der rohrförmigen Innenwand 24 und größer ist als ein Durchmesser c der ersten Öffnung 26. Entsprechend zeigen die Figuren 1 und 2 eine nicht-abdichtende Position der Dichtung 40.

Da der Innenraum 22 des Produktvorhaltebehälters 20 mit der Umgebung des Produktvorhaltebehälters 20 beziehungsweise dem Reinraum 62 fluidtechnisch kommuniziert, hängt der Druck in dem Innenraum 22 von dem im Reinraum 62 herrschenden Druck ab. In einem Reinigungsbetrieb ist es jedoch erforderlich, einen Überdruck in dem Produktvorhaltebehälter 20 bereitzustellen, um, beispielsweise in einem CIP-Reinigungsprozess, die Bauteile der Getränkeabfüllanlage zu spülen, welche während dem Füllbetrieb mit dem Füllprodukt in Kontakt treten. Weiterhin kann das Reinigungsmedium so auch versprüht werden.

Um in dem Produktvorhaltebehälter 20 einen Überdruck zu erzeugen, wird die Dichtung 40 auf den Absatz 29 herab gesenkt, wodurch die erste Öffnung 26 des Produktvorhaltebehälters 20 verschlossen werden kann. Eine abdichtende Position der Dichtung 40 ist in Figur 3 gezeigt. Damit die auf der äußeren Umfangsoberfläche des Produktzulaufrohrs 30 angeordnete Dichtung 40 von einer nicht-abdichtenden Position in eine abdichtende Position und umgekehrt bewegt werden kann, ist das Produktzulaufrohr 30 in Richtung der Längsachse L verschiebbar ausgebildet. Um die Dichtung 40 von der in den Figuren 1 und 2 gezeigten, nicht-abdichtenden Position in die in Figur 3 gezeigte abdichtende Position zu bringen, führt das Produktzulaufrohr 30 eine Hubbewegung in Richtung der Längsachse L nach unten aus. Durch eine Hubbewegung des Produktzulaufrohrs nach oben kann die Dichtung 40 von der in Figur 3 gezeigten, abdichtenden Position in die in den Figuren 1 und 2 gezeigte, nicht-abdichtende Position gebracht werden.

Das Produktzulaufrohr 30 führt von einem Bereich außerhalb des Isolators 60 durch den Reinraum 62 in den Produktvorhaltebehälter 20. Um die Hubbewegung des Produktzulaufrohrs 30 zu ermöglichen und gleichzeitig das Produktzulaufrohr 30 im Bereich des Eintritts in den Isolator 60 gegen diesen abzudichten, ist ein in Figur 1 gezeigter Balg 36 bereitgestellt. Ein Ende des Balgs 36 ist auf der äußeren Umfangsoberfläche des Produktzulaufrohrs 30 angeordnet. Das andere Ende des Balgs 36 ist mit dem Isolator 60, welcher im Bereich des Eintritts des Produktzulaufrohrs 30 durch eine Drehtellerabstützung 82 gebildet wird, verbunden. Die Drehtellerabstützung 82 weist in ihrer Mitte eine Öffnung 84 auf, durch welche das Produktzulaufrohr 30 verläuft. Führt das Produktzulaufrohr 30 eine Hubbewegung nach oben in Richtung der Längsachse L aus, wird der Balg 36 gestreckt. Erfährt das Produktzulaufrohr 30 eine Hubbewegung nach unten entlang der Längsachse L, wird der Balg 36 zusammengefaltet. Entsprechend dichtet der Balg 36 das Produktzulaufrohr 30 dynamisch gegenüber der Drehtellerabstützung 82 beziehungsweise dem Isolator 60 ab.

Die Figuren 1 bis 3 zeigen, dass im Inneren des Produktzulaufrohrs 30 konzentrisch zu diesem eine Reinigungsleitung 70 verläuft. Die Reinigungsleitung 70 tritt im Bereich des umgebogenen Abschnitts 32 des Produktzulaufrohrs 30 aus diesem heraus, so dass das Ende der Rohrleitung 70 in den Innenraum 22 des Produktvorhaltebehälters 20 hineinragt. An dem Ende der Reinigungsleitung 70 ist mindestens eine Sprühdüse 72 angeordnet, mittels welcher ein Reinigungsmedium in den Produktvorhaltebehälter 20 eingebracht werden kann.

Das Reinigungsmedium wird im Innenraum 22 des Produktvorhaltebehälters 20 über die mindestens eine Sprühdüse 72 versprüht, wenn sich die Dichtung 40 in der in Figur 3 gezeigten abdichtenden Position befindet. Dadurch ist es möglich, im Innenraum 22 des Produktvorhaltebehälters 20 während dem Reinigungsbetrieb einen Überdruck aufzubauen, mittels welchem der Innenraum 22, aber auch das an den Produktvorhaltebehälter 20 angeschlossene Füllorgan 50, beispielsweise durch Bedämpfen, zu reinigen.

Die Reinigungsleitung 70 ist derart mit dem Produktzulaufrohr 30 verbunden, dass sie der Hubbewegung des Produktzulaufrohrs 30 folgt.

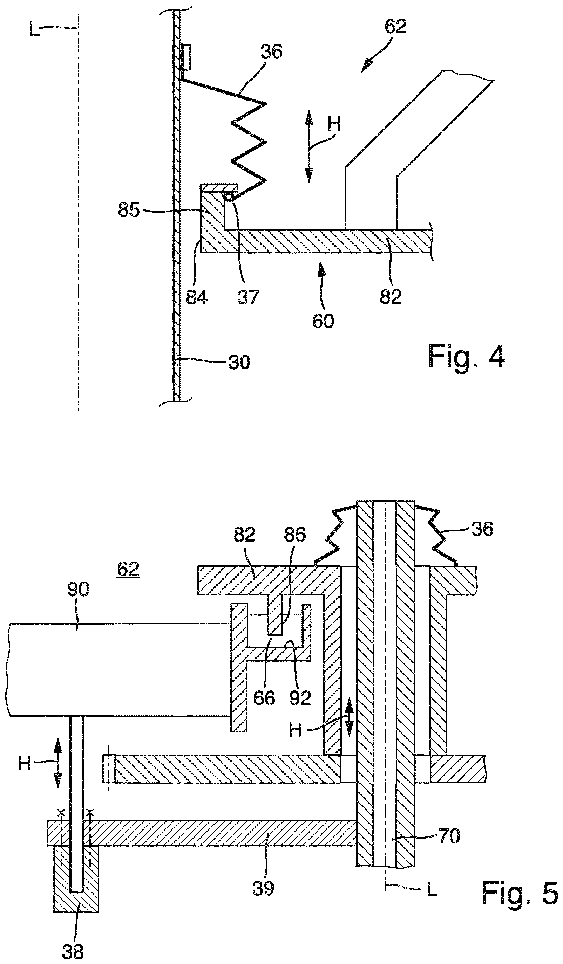

Figur 4 ist eine Detailansicht des Bereichs des Isolators 60 zu entnehmen, in welchem das Produktzulaufrohr 30 durch die Öffnung 84 der Drehtellerabstützung 82 verläuft. Der Balg 36 ist drehfest auf der Umfangsoberfläche des Produktzulaufrohrs 30 fixiert. Das andere Ende des Balgs 36 ist über eine Dichtung 37 auf der äußeren Umfangsoberfläche eines rohrförmigen Vorsprungs 85 der Öffnung 84 angeordnet. Dabei verläuft der rohrförmigen Vorsprung 85 der Öffnung 84 konzentrisch zu der Längsachse L des Produktzulaufrohrs 30.

Da die Drehtellerabstützung 82 relativ zu dem Produktzulaufrohr 30 rotiert, ist die Dichtung 37 in Form einer Drehdichtung ausgebildet. Der Balg ist derart ausgebildet, das er die maximale Hubbewegung H des Produktzulaufrohrs 30 zulässt und gleichzeitig für eine Abdichtung des Reinraums 62 gegenüber der Umgebung sorgt.

Figur 5 ist eine Hubeinrichtung 38 zur Bereitstellung der Hubbewegung H des Produktzulaufrohrs 30 und der Reinigungsleitung 70 zu entnehmen. Bei der Hubeinrichtung 38 handelt es sich um einen Pneumatikzylinder, welcher über einen Arm 39 mit dem Produktzulaufrohr 30 verbunden ist und das Produktzulaufrohr 30 sowie die Reinigungsleitung 70 anheben und absenken kann. Dabei stützt sich die Hubeinrichtung 38 an einem stationären Vortisch 90 ab, welcher einen Teil des Isolators 60 bildet und den Reinraum 62 von der Umgebung trennt. Insgesamt sind drei Hubeinrichtungen in einem Winkel von 120 ° zueinander um das Produktzulaufrohr 30 angeordnet. Alternativ können auch ein, zwei, vier, fünf oder mehr Hubeinrichtungen bereitgestellt werden. Damit die Drehtellerabstützung 82 relativ zu dem stationären Vortisch 90 rotieren kann und der Reinraum 62 dennoch von der Umgebung isoliert werden kann, sind die Drehtellerabstützung 82 und der Vortisch 90 über eine Wasserdichtung 64 gegeneinander abgedichtet. Dabei verläuft im Vortisch eine mit Wasser gefüllte, ringförmige Nut 92, durch welche ein sich von der Unterseite der Drehtellerabstützung 82 erstreckender, ringförmiger Vorsprung rotieren kann.

### Bezugszeichenliste

- 10: Vorrichtung
- 20: Produktvorhaltebehälter
- 22: Innenraum
- 24: Innenwand
- 26: Erste Öffnung
- 27: Zweite Öffnung
- 28: Füllstandsonde
- 29: Absatz
- 30: Produktzulaufrohr
- 32: Umgebogener Abschnitt
- 33: Endabschnitt
- 34: Produktzulaufrohröffnung
- 36: Balg
- 37: Dichtung
- 38: Hubeinrichtung
- 39: Arm
- 40: Dichtung
- 42: Halterung
- 50: Füllorgan
- 52: Füllorganversorgung
- 60: Isolator
- 62: Reinraum
- 64: Wasserdichtung
- 70: Reinigungsleitung
- 72: Sprühdüse
- 80: Drehteller
- 82: Drehtellerabstützung
- 84: Öffnung
- 85: Vorsprung
- 86: Vorsprung
- 90: Vortisch
- 92: Nut
- H: Hubrichtung
- L: Längsachse
- R: Rotationsachse
- a: Durchmesser
- b: Durchmesser
- c: Durchmesser

## Patentansprüche

1. Vorrichtung (10) zum Befüllen mindestens eines Behälters mit einem Füllprodukt in einer Getränkeabfüllanlage, mit einem Produktvorhaltebehälter (20) zur Aufnahme des Füllprodukts und mindestens einem mit dem Produktvorhaltebehälter (20) kommunizierenden Füllorgan (50) zur Befüllung des Behälters mit dem Füllprodukt, sowie einem Produktzulaufrohr (30) zum Zuführen von Füllprodukt in den Produktvorhaltebehälter (20), wobei eine Dichtung (40) zur Abdichtung des Produktzulaufrohrs (30) gegenüber einem Innenraum (22) des Produktvorhaltebehälters (20) vorgesehen ist,
**dadurch gekennzeichnet, dass**
die Dichtung (40) zwischen einer abdichtenden Position zur Reinigung und einer nicht-abdichtenden Position für den Füllbetrieb schaltbar ist.

2. Vorrichtung (10) gemäß Anspruch 1, **dadurch gekennzeichnet, dass** der Produktvorhaltebehälter (20) eine Öffnung (26, 27) aufweist, durch welche das Produktzulaufrohr (30) in den Produktvorhaltebehälter (20) geführt ist, wobei zwischen der Öffnung (26, 27) und dem Produktzulaufrohr (30) ein Spalt bereitgestellt ist, welcher mittels der Dichtung (40) verschließbar ist.

3. Vorrichtung (10) gemäß einem der vorhergehenden Ansprüche, **dadurch gekennzeichnet, dass** das Produktzulaufrohr (30) stationär und konzentrisch zu dem Produktvorhaltebehälter (20) angeordnet ist, wobei der Produktvorhaltebehälter (20) um das Produktzulaufrohr (30) herum rotierbar angeordnet ist.

4. Vorrichtung (10) gemäß einem der vorhergehenden Ansprüche, **dadurch gekennzeichnet, dass** die Dichtung (40) an dem Produktzulaufrohr (30), bevorzugt einer äußeren Umfangsoberfläche des Produktzulaufrohrs (30) oder an dem Produktvorhaltebehälter (20), bevorzugt an einer Öffnung des Produktvorhaltebehälters (20), angeordnet ist.

5. Vorrichtung (10) gemäß einem der vorhergehenden Ansprüche, **dadurch gekennzeichnet, dass** das Produktzulaufrohr (30) und der Produktvorhaltebehälter (20) zumindest teilweise von einem Isolator (60) umgeben sind.

6. Vorrichtung (10) gemäß Anspruch 5, **dadurch gekennzeichnet, dass** das Produktzulaufrohr (30) über eine Dichtung, bevorzugt einen Balg (36), abgedichtet in den Isolator (60) geführt ist.

7. Vorrichtung (10) gemäß Anspruch 5 oder 6, **dadurch gekennzeichnet, dass** im Füllbetrieb, in dem die Dichtung (40) in der geöffneten Position ist, der Innenraum (22) des Produktvorhaltebehälters (20) mit dem Innenraum des Isolators (60) zum Druckausgleich kommuniziert.

8. Vorrichtung (10) gemäß einem der vorhergehenden Ansprüche, **dadurch gekennzeichnet, dass** das Produktzulaufrohr (30) und/oder der Produktvorhaltebehälter (20) zwischen einer geöffneten und einer abdichtenden Position verschiebbar ist, wobei die Dichtung (40) relativ zu dem Produktvorhaltebehälter (20) und/oder dem Produktzulaufrohr (30) bewegbar ist.

9. Vorrichtung (10) gemäß Anspruch 8, **dadurch gekennzeichnet, dass** an dem Produktzulaufrohr (30) und/oder dem Produktvorhaltebehälter (20) mindestens eine Hubeinrichtung (38), bevorzugt ein Pneumatikzylinder, zum Bereitstellen einer Hubbewegung zwischen der geöffneten und der abdichtenden Position angeordnet ist.

10. Vorrichtung (10) gemäß einem der vorhergehenden Ansprüche, **dadurch gekennzeichnet, dass** die Dichtung (40) ein O-Ring oder eine Dichtlippe ist.

11. Verfahren zum Reinigen einer Vorrichtung (10) zum Befüllen eines Behälters mit einem Füllprodukt in einer Getränkeabfüllanlage, bevorzugt gemäß einem der vorstehenden Ansprüche, umfassend:
Abdichten eines Produktzulaufrohrs (30) gegen einen Produktvorhaltebehälter (20) mittels einer schaltbaren Dichtung (40) für den Reinigungsbetrieb,
Reinigen der Vorrichtung (10), insbesondere des Produktvorhaltebehälters (20), und
Öffnen der Dichtung (40) zwischen dem Produktzulaufrohr (30) und dem Produktvorhaltebehälter (20) für den Füllbetrieb.

## Claims

1. Device (10) for filling at least one vessel with a filling product in a beverage filling system, having a product holding vessel (20) for receiving the filling product and at least one filling member (50) communicating with the product holding vessel (20) for filling the vessel with the filling product, and a product feed tube (30) for feeding filling product into the product holding vessel (20), wherein a seal (40) for sealing the product feed tube (30) with respect to an interior space (22) of the product holding vessel (20) is provided,
**characterised in that**
the seal (40) can be switched between a sealing position for cleaning and a non-sealing position for the filling operation.

2. Device (10) according to claim 1, **characterised in that** the product holding vessel (20) has an aperture (26, 27) through which the product feed tube (30) is guided into the product holding vessel (20), wherein a gap is provided between the aperture (26, 27) and the product feed tube (30) which can be closed by means of the seal (40).

3. Device (10) according to any of the preceding claims, **characterised in that** the product feed tube (30) is disposed in a stationary manner and concentrically with the product holding vessel (20), the product holding vessel (20) being disposed so as to be rotatable around the product feed tube (30).

4. Device (10) according to any of the preceding claims, **characterised in that** the seal (40) is disposed on the product feed tube (30), preferably an outer peripheral surface of the product feed tube (30) or on the product holding vessel (20), preferably an aperture of the product holding vessel (20).

5. Device (10) according to any of the preceding claims, **characterised in that** the product feed tube (30) and the product holding vessel (20) are at least partially enclosed by an isolator (60).

6. Device (10) according to claim 5, **characterised in that** the product feed tube (30) is guided into the isolator (60) via a seal, preferably a bellows (36), in a sealed manner.

7. Device (10) according to claim 5 or 6, **characterised in that** in the filling operation, in which the seal (40) is in the open position, the interior space (22) of the product holding vessel (20) is in communication with the interior space of the isolator (60) to equalise pressures.

8. Device (10) according to any of the preceding claims, **characterised in that** the product feed tube (30) and/or the product holding vessel (20) are displaceable between an open and a sealing position, wherein the seal (40) is displaceable relative to the product holding vessel (20) and/or the product feed tube (30).

9. Device (10) according to claim 8, **characterised in that** at least one lifting device (38), preferably a pneumatic cylinder, for providing a lifting movement between the open and the sealing position, is disposed on the product feed tube (30) and/or the product holding vessel (20).

10. Device (10) according to any of the preceding claims, **characterised in that** the seal (40) is an O-ring seal or a sealing lip.

11. Method for cleaning a device (10) for filling a vessel with a filling product in a beverage filling system, preferably according to any of the preceding claims, comprising:
sealing a product feed tube (30) with respect to a product holding vessel (20) by means of a switchable seal (40) for the cleaning operation,
cleaning the device (10), in particular the product holding vessel (20), and
opening the seal (40) between the product feed tube (30) and the product holding vessel (20) for the filling operation.

## Revendications

1. Dispositif (10) de remplissage d'au moins un récipient avec un produit de remplissage dans une installation d'embouteillage, avec un réservoir de produit (20) pour la réception du produit de remplissage et au moins un organe de remplissage (50) communiquant avec le réservoir de produit (20) pour le remplissage du récipient avec le produit de remplissage, ainsi qu'un tube d'amenée de produit (30) pour l'amenée de produit de remplissage dans le réservoir de produit (20), dans lequel un joint d'étanchéité (40) est prévu pour l'étanchéification du tube d'amenée de produit (30) par rapport à un espace intérieur (22) du réservoir de produit (20),
**caractérisé en ce que**
le joint d'étanchéité (40) est commutable entre une position étanche pour le nettoyage et une position non étanche pour le mode de remplissage.

2. Dispositif (10) selon la revendication 1, **caractérisé en ce que** le réservoir de produit (20) présente une ouverture (26, 27), par laquelle le tube d'amenée de produit (30) est guidé dans le réservoir de produit (20), dans lequel une fente, laquelle peut être fermée au moyen du joint d'étanchéité (40), est mise à disposition entre l'ouverture (26, 27) et le tube d'amenée de produit (30).

3. Dispositif (10) selon l'une quelconque des revendications précédentes, **caractérisé en ce que** le tube d'amenée de produit (30) est agencé de manière stationnaire et concentrique par rapport au réservoir de produit (20), dans lequel le réservoir de produit (20) est agencé de manière rotative autour du tube d'amenée de produit (30).

4. Dispositif (10) selon l'une quelconque des revendications précédentes, **caractérisé en ce que** le joint d'étanchéité (40) est agencé au niveau du tube d'amenée de produit (30), de préférence d'une surface circonférentielle extérieure du tube d'amenée de produit (30) ou au niveau du réservoir de produit (20), de préférence au niveau d'une ouverture du réservoir de produit (20).

5. Dispositif (10) selon l'une quelconque des revendications précédentes, **caractérisé en ce que** le tube d'amenée de produit (30) et le réservoir de produit (20) sont entourés au moins en partie d'un isolant (60).

6. Dispositif (10) selon la revendication 5, **caractérisé en ce que** le tube d'amenée de produit (30) est guidé de manière étanche dans l'isolant (60) par le biais d'un joint d'étanchéité, de préférence un soufflet (36).

7. Dispositif (10) selon la revendication 5 ou 6, **caractérisé en ce que** dans le mode de remplissage, dans lequel le joint d'étanchéité (40) est dans la position ouverte, l'espace intérieur (22) du réservoir de produit (20) communique avec l'espace intérieur de l'isolant (60) pour la compensation de pression.

8. Dispositif (10) selon l'une quelconque des revendications précédentes, **caractérisé en ce que** le tube d'amenée de produit (30) et/ou le réservoir de produit (20) peut coulisser entre une position ouverte et une position étanche, dans lequel le joint d'étanchéité (40) est déplaçable par rapport au réservoir de produit (20) et/ou au tube d'amenée de produit (30).

9. Dispositif (10) selon la revendication 8, **caractérisé en ce qu'**au moins un dispositif de levage (38), de préférence un cylindre pneumatique, est agencé au niveau du tube d'amenée de produit (30) et/ou du réservoir de produit (20) pour la mise à disposition d'un mouvement de levage entre la position ouverte et la position étanche.

10. Dispositif (10) selon l'une quelconque des revendications précédentes, **caractérisé en ce que** le joint d'étanchéité (40) est un joint torique ou une lèvre d'étanchéité.

11. Procédé de nettoyage d'un dispositif (10) de remplissage d'un récipient avec un produit de remplissage dans une installation d'embouteillage, de préférence selon l'une quelconque des revendications précédentes, comprenant :
l'étanchéification d'un tube d'amenée de produit (30) contre un réservoir de produit (20) au moyen d'un joint d'étanchéité (40) commutable pour le mode de nettoyage,
le nettoyage du dispositif (10), en particulier du réservoir de produit (20), et
l'ouverture du joint d'étanchéité (40) entre le tube d'amenée de produit (30) et le réservoir de produit (20) pour le mode de remplissage.
